# EUROPEAN PATENT APPLICATION

(11) **EP 4 503 213 A1**
(43) Date of publication of application: **05.02.2025**
(21) Application number: 23204909.8
(22) Date of filing: 20.10.2023
(51) Int. Cl.: H01M 10/04, H01M 10/0587

(54) **PRISMATIC SECONDARY BATTERY MANUFACTURING METHOD**

(30) Priority: 02.08.2023 KR 20230100817
(71) Applicant: Lee, Kye-seol, Seoul (KR)
(72) Inventor: Lee, Kye-seol, Seoul (KR)
(74) Representative: Wunderlich & Heim Patentanwälte PartG mbB

(57) **Abstract**

Disclosed is a prismatic secondary battery manufacturing method. A jelly roll is wound into a circular shape, two guide pins are inserted into the jelly roll, the guide pins are moved away from side to side by stepwise rotation and vibration of the guide pins such that the jelly roll has an oval shape, the jelly roll is heated with ultrasonic waves while being pressed at the top and bottom using a first press such that a middle part of the jelly roll has a rectangular shape and each of opposite ends of the jelly roll has a circular shape, the guide pins inserted in both circular shapes are completely removed, and the jelly roll is heated with ultrasonic waves while being pressed at the top and bottom using a second press, whereby a prismatic battery having no wrinkles in a separator film is completed.

## Description

### BACKGROUND OF THE INVENTION

### Field of the Invention

The present invention relates to a prismatic secondary battery manufacturing method, and more particularly to a method of inserting guide pins into a jelly roll, stretching the jelly roll from side to side by tap detection and stepwise rotation and vibration, pressing and heating the jelly roll using a first press, removing the guide pins, and pressing and heating the jelly roll again using a second press, thereby preventing wrinkling of a separator film.

### Description of the Related Art

In general, there are two main methods of storing electrical energy: an electrolytic method, which uses redox reaction of ions to store electrical energy as chemical energy, and an electrostatic method, which uses a polarization phenomenon between two electrodes to store electrical energy as electrical energy.

A secondary battery, such as a lead-acid battery, a nickel-cadmium battery, a nickel-metal hydride battery, or a lithium-ion polymer battery, may be reused by repeated charging and discharging through reversible interconversion between chemical energy and electrical energy, which is the electrolytic method, and a capacitor may be reused by repetitive charging and discharging using a polarization phenomenon between two polar plates, which is the electrostatic method.

An electrolytic battery, which is repeatedly charged and discharged through reversible redox reaction between electrical energy and chemical energy, has high energy density and is capable of storing a large amount of energy. However, energy conversion loss occurs during interconversion between electrical energy and chemical energy, heat is generated, there is a risk of fire and explosion, and a large amount of energy cannot be charged and discharged within a short time, resulting in long charging time, difficult charging, poor discharge characteristics, short lifespan, and pollutants.

In recent years, interest in energy storage technology has been growing, applications have been expanding to mobile phones, camcorders, laptop computers, personal computers, and electric vehicles, and the efforts in research and development of electrochemical devices related thereto are gradually becoming more concrete. In this regard, the electrochemical devices are receiving the most attention, and among the electrochemical devices, development of secondary batteries, which can be charged and discharged, has become the focus of attention. In recent years, research and development have been conducted to improve capacity density and specific energy of such batteries.

Among secondary batteries currently in use, a lithium secondary battery, developed in the early 1990s, has gained attention for their higher operating voltage and energy density than conventional batteries, each of which uses an aqueous electrolyte solution, such as an Ni-MH battery, an Ni-Cd battery, and a lead-sulfate battery. However, the lithium-ion battery suffers from safety issues, such as ignition and explosion, due to the use of an organic electrolytic solution and is difficult to manufacture.

Recently, a lithium-ion polymer battery has been considered as one of the next-generation batteries by improving the weaknesses of the lithium-ion battery, but the capacity of the lithium-ion polymer battery is lower than the capacity of the lithium-ion battery, and the discharge capacity of the lithium-ion polymer battery, especially at low temperatures, is insufficient, and therefore improvement thereof is urgently needed.

The safety characteristics of the above-mentioned electrochemical devices have different aspects, and the most important consideration regarding the safety of the electrochemical devices is that the electrochemical devices should not cause injury to users in the event of malfunction, and to this end, safety standards strictly regulate the ignition and combustion of electrochemical devices.

In terms of the safety characteristics of the electrochemical devices, there is a great concern that the electrochemical devices may explode if the electrochemical devices overheat, whereby thermal runaway occurs or a separator is penetrated. In particular, a polyolefin-based porous substrate used as a separator for electrochemical devices exhibits extreme thermal shrinkage behavior at a temperature of 100 degrees or higher due to material characteristics and manufacturing process characteristics including stretching, causing short circuit between a positive electrode and a negative electrode.

In a process of manufacturing the separator, a separator having an organic-inorganic porous coating layer formed on the surface of a film is wound on a rewinder in the form of a roll for use in a process of manufacturing an electrode assembly for lithium secondary batteries, and a guide roll is installed on the movement path of the separator for smooth winding operation, whereby the separator necessarily passes through the guide roll before being wound on the rewinder roll.

However, the separator has a thickness of about 10 to 50 µm, i.e. the separator is a very thin film. As a result, the separator is wrinkled while being moved in contact with the guide roll. If the separator film is wrinkled, the amount of the separator wound on the roll is reduced, resulting in a decrease in yield.

In addition, there are conventional problems that may adversely affect the electrical properties and overall characteristics of a product after winding.

### [Prior Art Documents]

### [Patent Documents]

Korean Patent Application No. 10-2007-7004325
Korean Patent Application No. 10-2019-0032322

### SUMMARY OF THE INVENTION

The present invention has been made in view of the above problems, and it is an object of the present invention to provide a prismatic secondary battery manufacturing method in which a film is manufactured using guide pins and presses in order to prevent wrinkles generated in a process of winding a separator film having a porous organic-inorganic coating layer formed thereon.

In accordance with the present invention, the above and other objects can be accomplished by the provision of a prismatic secondary battery manufacturing method including a first step of winding a jelly roll in a circular shape, a second step of inserting two guide pins into the jelly roll, a third step of uniformly moving the guide pins away from side to side by stepwise rotation and vibration of the guide pins such that the jelly roll has an oval shape, a fourth step of heating the jelly roll with ultrasonic waves while pressing the jelly roll at the top and bottom using a first press such that a middle part of the jelly roll has a rectangular shape and each of opposite ends of the jelly roll has a circular shape, a fifth step of removing the guide pins inserted in both circular shapes in the state in which the jelly roll is stretched by top and bottom pressing of the first press and ultrasonic heating in the fourth step, and a sixth step of heating the jelly roll with ultrasonic waves while pressing the jelly roll at the top and bottom using a second press in the state in which both guide pins are removed in the fifth step to complete a prismatic battery having no wrinkles in a separator film.

Ultrasonic waves or heat may be applied during pressing of the first press and the second press.

When the jelly roll is spread from side to side through the guide pins, the jelly roll may be uniformly spread by stepwise rotation and vibration according to tilting.

### BRIEF DESCRIPTION OF THE DRAWINGS

The above and other objects, features and other advantages of the present invention will be more clearly understood from the following detailed description taken in conjunction with the accompanying drawings, in which:

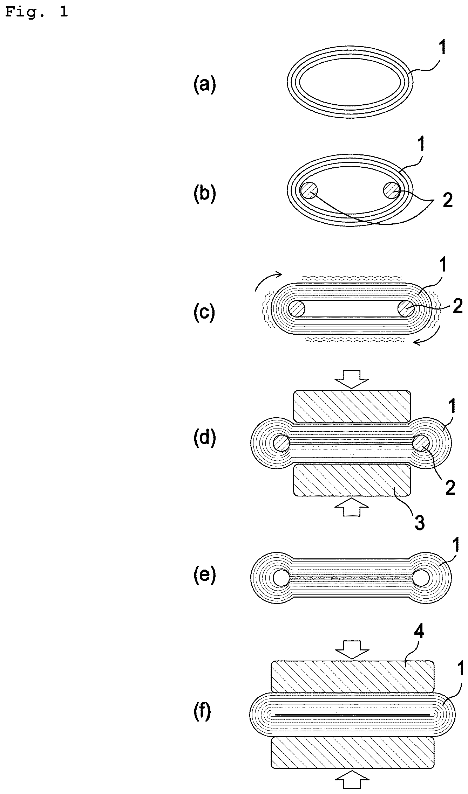

FIG. 1 is a view showing the manufacturing sequence of a prismatic secondary battery manufacturing method according to the present invention.

### DETAILED DESCRIPTION OF THE INVENTION

Hereinafter, an embodiment of the present invention will be described in detail with reference to the accompanying drawings.

FIG. 1 is a view showing the sequence of a prismatic secondary battery manufacturing method according to the present invention. In general, lithium-ion batteries are classified into three types of batteries: a cylindrical battery, a prismatic battery, and a pouch type battery, based on the packaging material and shape thereof.

In addition, the battery may be classified as a wound type battery or a stacked type battery based on the shape of a jelly roll, which is configured to have a structure in which a positive electrode, a negative electrode, and a separator are assembled. An electrode process and a formation process are not greatly affected by the shape of the jelly roll, but an assembly process requires different facilities depending on how the jelly roll is assembled.

The present invention relates to a method for manufacturing a prismatic secondary battery, which is one of the secondary batteries classified as described above. A jelly roll 1 is first wound into a circular shape, as shown in FIG. 1(a), and two guide pins 2 are inserted into the jelly roll 1, as shown in FIG. 1(b).

When the guide pins 2 are inserted into the jelly roll 1, as described above, and the guide pins 2 are moved away from side to side by rotation and vibration of the guide pins 2, the jelly roll 1 is formed so as to have an oval shape, as shown in FIG. 1(c) . When the jelly roll 1 is spread from side to side by the guide pins 2, the jelly roll 1 is spread by tilting of the guide pins 2, i.e., stepwise rotation and vibration thereof.

When the jelly roll 1 is heated with ultrasonic waves while being pressed at the top and bottom using a first press 3, as shown in FIG. 1(d), in the state in which the jelly roll 1 is formed so as to have an oval shape, as shown in FIG. 1(c), the jelly roll 1 is stretched. As a result, a middle part of the jelly roll 1 has a rectangular shape and each of opposite ends of the jelly roll 1 has a circular shape. At this time, each of the guide pins 2 remains inserted in the center of a corresponding one of the circular shapes.

Furthermore, in the state in which the jelly roll 1 is stretched by the top and bottom pressing of the first press 3 and ultrasonic heating, as shown in FIG. 1(d), the guide pins 2 inserted in both circular shapes are completely removed, as shown in FIG. 1(e).

When the jelly roll 1 is heated with ultrasonic waves while being pressed at the top and bottom using a second press 4 in the state in which both the guide pins 2 are removed, as shown in FIG. 1(e), a prismatic battery is completed.

When the prismatic secondary battery is manufactured through the process as described above, the negative electrode film and the positive electrode film constituting the jelly roll 1 are pressed by the first and second presses 3 and 4 and heated, whereby wrinkling of the films is prevented.

As is apparent from the above description, the present invention has the effect of preventing wrinkling of a separator film and aligning films by inserting guide pins into a jelly roll, stretching the jelly roll from side to side by tap detection and rotation, pressing and heating the jelly roll using a first press, removing the guide pins, and pressing and heating the jelly roll again using a second press that is wider than the first press.

The present invention as described above is not limited to the above embodiment, and it will be appreciated that various embodiments can be usefully applied by a person having ordinary skill in the art to which the present invention pertains.

## Claims

1. A prismatic secondary battery manufacturing method comprising:
a first step of winding a jelly roll in a circular shape;
a second step of inserting two guide pins into the jelly roll;
a third step of moving the guide pins away from side to side by stepwise rotation and vibration of the guide pins such that the jelly roll has an oval shape;
a fourth step of heating the jelly roll while pressing the jelly roll at a top and bottom using a first press such that a middle part of the jelly roll has a rectangular shape and each of opposite ends of the jelly roll has a circular shape;
a fifth step of removing the guide pins inserted in both circular shapes in a state in which the jelly roll is stretched by top and bottom pressing of the first press in the fourth step; and
a sixth step of pressing the jelly roll at the top and bottom using a second press in a state in which both guide pins are removed in the fifth step to complete a prismatic battery having no wrinkles in a film.

2. The prismatic secondary battery manufacturing method according to claim 1, wherein the second press is formed so as to have a size capable of pressing an entirety of the jelly roll excluding a semicircular part at each end.

3. The prismatic secondary battery manufacturing method according to claim 1 or 2, wherein the second press is formed so as to have a wider size from side to side than the first press.

4. The prismatic secondary battery manufacturing method according to claim 1, wherein ultrasonic heating or heating is performed during pressing of the first press and the second press.
